# EUROPEAN PATENT APPLICATION

(11) **EP 4 302 939 A1**
(43) Date of publication of application: **10.01.2024**
(21) Application number: 21928999.8
(22) Date of filing: 03.03.2021
(51) Int. Cl.: B25J 17/00

(54) **ROBOT ARM AND ARTICULATED ROBOT ARM**

(71) Applicant: Hibot Corporation, Tokyo 141-0001 (JP)
(72) Inventor: YAMADA, Hiroya, Tokyo 140-0001 (JP)
(74) Representative: Feira, Edoardo
(86) International application number: PCT/JP2021/008028
(87) International publication number: WO 2022/185423

(57) **Abstract**

With the purpose of realizing a robot arm that achieves both lightness of weight and ease of maintenance, and that has a long reach, a robot arm (100) is provided with a pneumatic cylinder (102) that pulls in a wire (104), and a movable pulley (105) that amplifies a force generated by the pneumatic cylinder (102) and that transmits the force by the wire (104), wherein the robot arm (100) is connected to a joint (103) that is driven by the force amplified by the movable pulley (105). An articulated robot arm can be realized by serially connecting a plurality of the robot arms (100) and arranging joints between the plurality of robot arms.

## Description

### TECHNICAL FIELD

The present invention relates to a robot arm and an articulated robot arm.

### BACKGROUND ART

In recent years, there has been a demand for robots for inspecting or performing maintenance on infrastructure facilities.

When robots are used for inspecting or performing maintenance on infrastructure facilities, inspection or maintenance work can be smoothly performed in areas (high locations, cramped locations, etc.) in which humans have difficulty performing work.

An example of an apparatus for performing work at high locations, cramped locations, etc. is an articulated robot arm.

In general, length of reach and lightness in weight are required in articulated robot arms.

Patent Document 1, which is an example of conventional art, discloses an articulated arm mechanism supporting an arm by using a wire.

The articulated arm mechanism disclosed in Patent Document 1 is configured so that the wire, which provides torque to multiple joints of an articulated arm mechanism, drives the arm by being pulled by a tension-generating mechanism, which is a drive source outside the arm, thus realizing an articulated arm mechanism that is lightweight, that consumes little power, that moves quickly and that is highly controllable.

Additionally, when providing a drive source inside the arm, the drive source must also be made light in weight.

An example of a lightweight drive source is a pneumatic cylinder.

Patent Document 2, which is an example of conventional art, discloses an articulated arm apparatus configured to move a piston by means of fluid pressure, thereby moving a cylinder rod attached to the piston.

Additionally, Patent Document 3, which is an example of conventional art, discloses an arm-type assistance apparatus that uses air as a fluid, so as to be actuated by fluid pressure from compressed air.

Patent Documents 2 and 3 are documents disclosing examples using pneumatic cylinders.

### CITATION LIST

### PATENT LITERATURE

Patent Document 1: JP 2003-89090 A
Patent Document 2: JP 2010-76089 A
Patent Document 3: JP 2019-181661 A

### SUMMARY OF INVENTION

### TECHNICAL PROBLEM

However, in Patent Document 1, which is conventional art, the wire passes through the joints of the arm. Thus, disassembly and replacement work on the arm is troublesome.

For this reason, there was an issue in that the ease of maintenance was low.

Additionally, in Patent Documents 2 and 3, which are conventional art, there is room for improvement in reducing the weight of the pneumatic cylinders.

The present invention was made in consideration of the above, and has the purpose of realizing a robot arm that achieves both lightness of weight and ease of maintenance, and that has a long reach.

### SOLUTION TO PROBLEM

One embodiment of the present invention that solves the above-mentioned problem and that achieves the purpose is a robot arm provided with a pneumatic cylinder that pulls in a wire, and a movable pulley that amplifies a force generated by the pneumatic cylinder and that transmits the force by the wire, wherein the robot arm is connected to a joint that is driven by the force amplified by the movable pulley.

The robot arm with the above-mentioned configuration is preferably provided with a pneumatic cylinder that pulls in a wire, and a plurality of serially connected movable pulleys that amplify a force generated by the pneumatic cylinder and that transmit the force by the wire, wherein the robot arm is connected to a joint that is driven by the force amplified by the plurality of movable pulleys.

Alternatively, an embodiment of the present invention is an articulated robot arm provided with a plurality of serially connected robot arms with either of the above-mentioned configurations, wherein the joints are disposed between the plurality of robot arms.

In the articulated robot arm with the above-mentioned configuration, when the wire is pulled into the pneumatic cylinder, the robot arm preferably moves in a direction orthogonal to a long-axis direction of the robot arm, with the joint as an axis of rotation.

In the articulated robot arm with the above-mentioned configuration, the wire preferably extends from a piston inside the pneumatic cylinder to a fixed pulley, is guided from the fixed pulley to the movable pulley, and one end of the wire guided from the movable pulley is fixed.

### EFFECTS OF INVENTION

According to the present invention, a robot arm that achieves both lightness of weight and ease of maintenance, and that has a long reach can be realized.

### BRIEF DESCRIPTION OF DRAWINGS

FIG. 1 is a schematic view illustrating an articulated robot arm according to an embodiment.
FIG. 2 is a side section view illustrating a robot arm according to an embodiment.
FIG. 3 is a side section view illustrating a robot arm according to an embodiment, using two movable pulleys that are serially connected.
FIG. 4(A) is a side section view illustrating the structure of a cylinder in an embodiment, and FIG. 4(B) is a side section view illustrating the structure of a cylinder that is a comparative example.

### DESCRIPTION OF EMBODIMENTS

Hereinafter, embodiments for carrying out the present invention will be explained with reference to the attached drawings.

However, the present invention is not to be construed in a limiting manner by the descriptions of the embodiments below.

### (Embodiments)

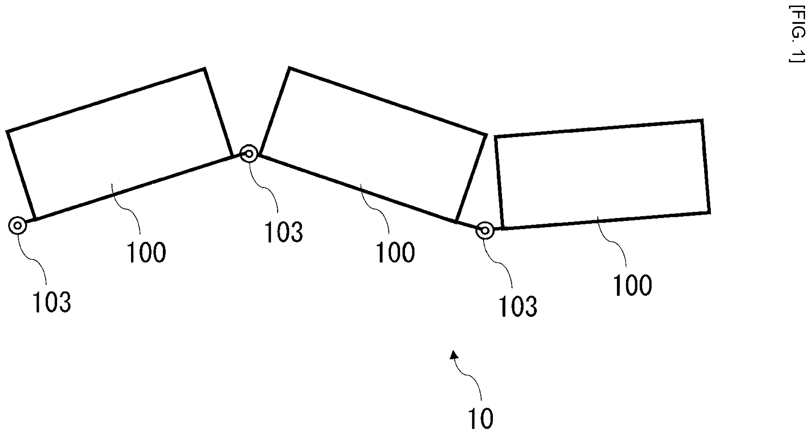

FIG. 1 is a schematic view illustrating an articulated robot arm 10 according to the present embodiment.

The articulated robot arm 10 illustrated in FIG. 1 is provided with three robot arms 100, the three robot arms 100 being serially connected by joints 103 disposed between the robot arms 100.

In the present invention, the number of robot arms 100 provided in the articulated robot arm 10 is not limited to three, and it is sufficient for there to be a plurality.

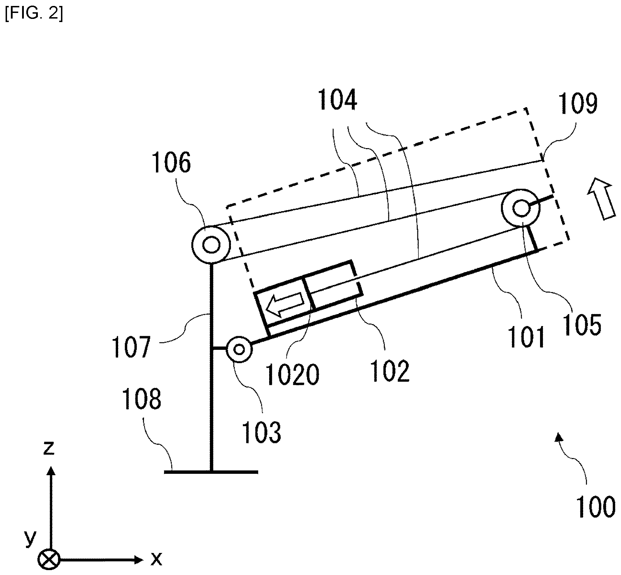

FIG. 2 is a side section view illustrating a robot arm 100 according to the present embodiment.

FIG. 2 shows an arm 101, a cylinder 102, a joint 103, a wire 104, a first pulley 105, a second pulley 106, a support 107, a fixation surface 108, and a wire fixture 109.

The arm 101 has one end, which is the base, connected to the joint 103, and is provided with a first pulley 105 disposed on the other end, which is the tip, and a cylinder 102 disposed on the inside.

The box formed by the dotted lines illustrated in FIG. 2 indicates the outline of the arm 101.

The cylinder 102 is a lightweight and small-diameter pneumatic cylinder inside which a piston 1020 moves back and forth in the long-axis direction, for pulling in the wire 104.

The long-axis direction of the arm 101 and the long-axis direction of the cylinder 102 are substantially aligned.

The joint 103 is disposed between the arm 101 and the support 107, and is configured to allow the tip of the arm 101 to be raised and lowered.

The wire 104 is a component to which a force generated by the pressure of compressed air received by the piston 1020 in the cylinder 102 is transmitted, the wire 104 extending from the piston 1020 in the cylinder 102 to the first pulley 105, being guided from the first pulley 105 to the second pulley 106, and being guided from the second pulley 106 to the wire fixture 109.

The first pulley 105 is disposed near the tip of the arm 101, and is a fixed pulley guiding the wire 104 extending from the cylinder 102 towards the second pulley 106.

The second pulley 106 is disposed on the support 107 at a certain distance from the joint 103, and is a movable pulley configured to guide the wire 104 that has been guided from the first pulley 105 towards the wire fixture 109, so as to amplify the force generated by the cylinder 102.

The joint 103 is driven by this amplified force.

The support 107 is fixed to the fixation surface 108, and has a protrusion, the joint 103 being provided on said protrusion.

The wire fixture 109 is disposed near the tip of the arm 101 and fixes an end of the wire 104.

In the robot arm 100 illustrated in FIG. 2, the second pulley 106 is pulled, by means of the wire 104 and the first pulley 105, by a force that is twice as strong as the force generated by the cylinder 102 disposed inside the arm 101, and this force drives the joint 103.

Due to this configuration, the force required for driving the joint 103 can be generated even with a lightweight, small-diameter cylinder 102.

Since the cylinder 102 has a small diameter, it can be installed inside the arm 101 by aligning the long-axis direction of the arm 101 with the long-axis direction of the cylinder 102.

In FIG. 2, an embodiment in which the joint 103 is driven by a force that is twice the force generated by the wire cylinder 102 was explained. However, the present invention is not limited thereto.

The force for driving the joint 103 can be further amplified by installing more fixed pulleys and serially connected movable pulleys.

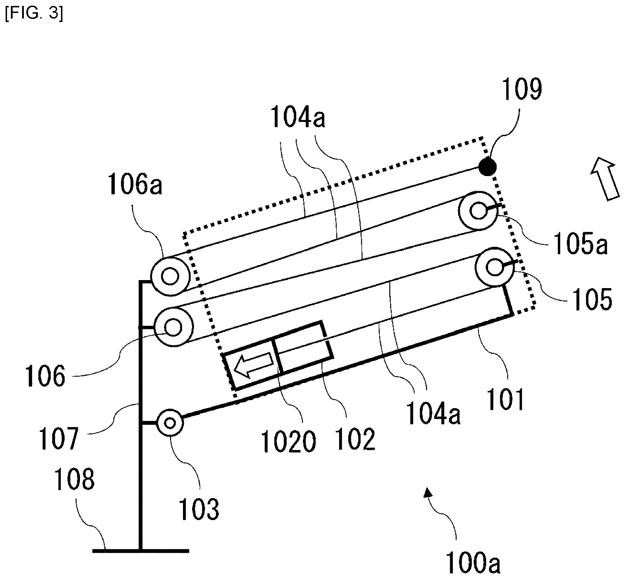

FIG. 3 is a side section view illustrating the robot arm 100a according to the present embodiment, wherein two serially connected movable pulleys are used.

FIG. 3 shows an arm 101, a cylinder 102, a joint 103, a wire 104a, first pulleys 105, 105a, second pulleys 106, 106a, a support 107, a fixation surface 108, and a wire fixture 109.

The wire 104a is a component to which back-and-forth movement of the piston 1020 in the cylinder 102 is transmitted, the wire 104a extending from the piston 1020 in the cylinder 102 to the first pulley 105, being guided from the first pulley 105 to the second pulley 106, being guided from the second pulley 106 to the first pulley 105a, being guided from the first pulley 105a to the second pulley 106a, and being guided from the second pulley 106a to the wire fixture 109.

The first pulley 105a is disposed near the first pulley 105, and is a fixed pulley guiding the wire 104 that has been guided to the second pulley 106 towards the second pulley 106a.

The first pulley 105a may be arranged so that the axis of rotation thereof is aligned with that of the first pulley 105.

The second pulley 106a is disposed near the second pulley 106, and is a movable pulley guiding the wire 104a that has been guided from the first pulley 105a towards the wire fixture 109.

The second pulley 106a may be arranged so that the axis of rotation thereof is aligned with that of the second pulley 106.

The wire fixture 109 is disposed near the first pulley 105a and fixes an end of the wire 104a.

In the robot arm 100a illustrated in FIG. 3, the force driving the joint 103 is amplified to four times the force generated by the wire cylinder 102.

In the structures illustrated in FIG. 2 and 3, the arm driving direction by the cylinder 102 is the one direction indicated by the arrow.

For this reason, a source for generating driving force in the opposite direction must be considered.

An example of a source for generating driving force in the opposite direction is gravity.

The case in which the source for generating driving force in the opposite direction is gravity can be realized by arranging the driving direction of the arm 101 by the cylinder 102 so as to always be in a direction for lifting the arm 101 in opposition to gravity.

The driving force in the opposite direction is not limited to gravity. Examples of other sources for generating driving force in the opposite direction include springs and motors.

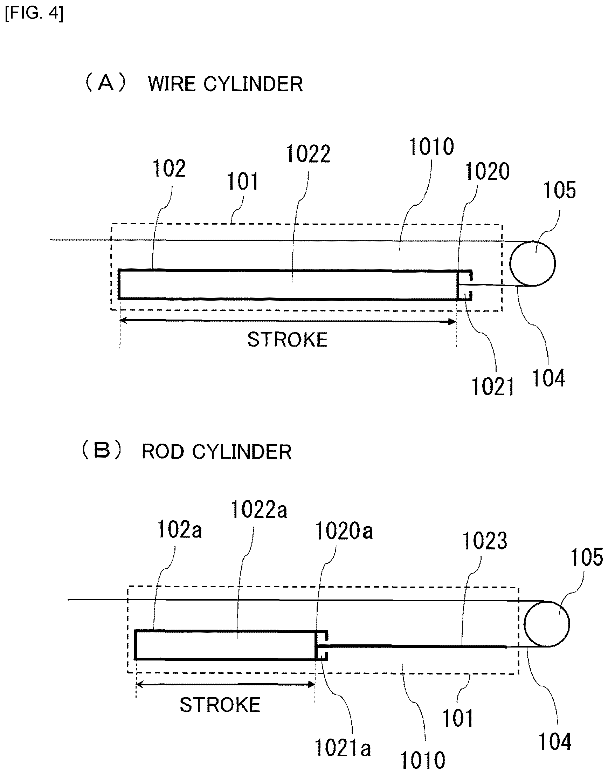

FIG. 4(A) is a side section view illustrating the structure of the cylinder 102 in the present embodiment, and FIG. 4(B) is a side section view illustrating the structure of a cylinder 10a that is a comparative example.

The cylinder 102 illustrated in FIG. 4(A) is a wire cylinder,
which is disposed in an in-arm space 1010 inside the arm 101, and which is provided with a piston 1020 to which the wire 104 is connected.

The piston 1020 separates the space inside the cylinder 102 into a first space 1021 surrounded by the inner wall surface of the cylinder 102 and the surface of the piston 1020 to which the wire 104 is connected, and a second space 1022 surrounded by the inner wall surface of the cylinder 102 and the surface of the piston 1020 on the side opposite to the surface to which the wire 104 is connected.

The first space 1021 and the second space 1022 are each provided with air introduction holes that are not illustrated, configured so that compressed air can be introduced to the first space 1021 through these air introduction holes, and so that air at ambient pressure can be drawn into and discharged from the second space 1022 through these air introduction holes.

When compressed air is introduced to the first space 1021 through the air introduction holes, the wire 104 is pulled into the piston 1020.

The cylinder 102a illustrated in FIG. 4(B) is a rod cylinder provided with a piston 1020a and a rod 1023, the rod 1023 being disposed between the wire 104 and the piston 1020a.

The piston 1020a separates the space inside the cylinder 102a between a first space 1021a surrounded by the inner wall surface of the cylinder 102a and the surface of the piston 1020a to which the rod 1023 is connected, and a second space 1022a surrounded by the inner wall surface of the cylinder 102a and the surface of the piston 1020a on the side opposite to the surface to which the wire 104 is connected.

The first space 1021a and the second space 1022a are each provided with air introduction holes that are not illustrated, configured so that compressed air can be introduced through these air introduction holes.

When compressed air is introduced to the first space 1021a through the air introduction holes, the rod 1023 is pulled into the piston 1020a.

When compressed air is introduced to the second space 1022a through the air introduction holes, the rod 1023 is pushed out from inside the piston 1020a.

With the cylinder 102 illustrated in FIG. 4(A), a stroke can extend across a portion corresponding to the length of the rod 1023 in the cylinder 102a illustrated in FIG. 4(B).

By using a wire cylinder as illustrated in FIG. 4(A), the stroke length can be extended, thereby increasing the mechanical energy generated by a single stroke of the cylinder 102.

As explained above, according to the present embodiment, a lightweight and powerful robot arm can be realized.

Furthermore, by serially connecting such robot arms, an articulated robot arm that achieves both lightness of weight and ease of maintenance, and that has a long reach can be realized.

The present invention is not limited to the embodiments described above, and includes various modified examples in which constituent elements are added, removed, or exchanged with respect to the structures described above.

### REFERENCE SIGNS LIST

- 10: Articulated robot arm
- 100, 100a: Robot arm
- 101: Arm
- 1010: In-arm space
- 102, 102a: Cylinder
- 1020, 1020a: Piston
- 1021,1021a: First space
- 1022, 1022a: Second space
- 1023: Rod
- 103: Joint
- 104, 104a: Wire
- 105, 105a: First pulley
- 106, 106a: Second pulley
- 107: Support
- 108: Fixation surface
- 109: Wire fixture

## Claims

1. A robot arm comprising:
a pneumatic cylinder that pulls in a wire; and
a movable pulley that amplifies a force generated by the pneumatic cylinder and that transmits the force by the wire,
wherein the robot arm is connected to a joint that is driven by the force amplified by the movable pulley.

2. A robot arm comprising:
a pneumatic cylinder that pulls in a wire; and
a plurality of serially connected movable pulleys that amplify a force generated by the pneumatic cylinder and that transmit the force by the wire,
wherein the robot arm is connected to a joint that is driven by the force amplified by the plurality of movable pulleys.

3. An articulated robot arm provided with a plurality of serially connected robot arms according to claim 1 or claim 2,
wherein the joints are disposed between the plurality of robot arms.

4. The articulated robot arm according to claim 3, wherein, when the wire is pulled into the pneumatic cylinder, the robot arm moves in a direction orthogonal to a long-axis direction of the robot arm, with the joint as an axis of rotation.

5. The articulated robot arm according to claim 4, wherein the wire extends from a piston inside the pneumatic cylinder to a fixed pulley, is guided from the fixed pulley to the movable pulley, and one end of the wire guided from the movable pulley is fixed.
